# EUROPÄISCHE PATENTSCHRIFT

(11) **EP 1 249 134 B1**
(45) Veröffentlichungstag und Bekanntmachung des Hinweises auf die Patenterteilung: **06.08.2003**
(21) Anmeldenummer: 01909415.0
(22) Anmeldetag: 04.01.2001
(51) Int. Cl.: H04N 13/00

(54) **VERFAHREN UND VORRICHTUNG ZU EINER HARDWARE-UNABHÄNGIGEN REALISIERUNG EINER STEREOSKOPISCHEN DARSTELLUNG**
METHOD AND DEVICE FOR ACHIEVING A HARDWARE-INDEPENDENT STEREOSCOPIC REPRESENTATION
PROCEDE ET DISPOSITIF POUR LA REALISATION INDEPENDANTE DU MATERIEL D'UNE REPRESENTATION STEREOSCOPIQUE

(30) Priorität: 05.01.2000 DE 10000314
(43) Veröffentlichungstag der Anmeldung: 16.10.2002
(73) Patentinhaber: Von Zmuda-Trzebiatowski, Richard, 52134 Herzogenrath (DE)
(72) Erfinder: Von Zmuda-Trzebiatowski, Richard, 52134 Herzogenrath (DE)
(74) Vertreter: Jostarndt, Hans-Dieter, Dr. Dipl.-Phys.
(86) Internationale Anmeldenummer: DE0100001
(87) Internationale Veröffentlichungsnummer: WO01050774

(56) Entgegenhaltungen:
- WO-A-95/26000
- US-A- 5 574 836

## Beschreibung

Die Erfindung betrifft ein Verfahren und eine Vorrichtung zu einer hardware-unabhängigen Realisierung einer stereoskopischen Darstellung für eine monokuläre Anwendung mit einem Treiber und mit einer weiteren zwischen der Anwendung und dem Treiber bereitgestellten Einheit.

Obwohl ein PC eine hochentwickelte Anzeigetechnologie verwendet, fehlt ihm noch das Charakteristikum, die verantwortlich dafür ist, die tatsächliche visuelle Welt realistisch aussehen zu lassen, nämlich die Tiefe. Das räumliche Sehen entsteht dadurch, weil jedes Auge Gegenstände von einem gegenüber dem anderen Auge leicht verschobenen Standpunkt aus sieht und der Abstand der Objekte durch einen Prozess, der allgemein unter dem Namen Tiefenwahrnehmung bekannt ist, beobachtet wird.

Diese Sinnwahrnehmung wird von einem digitalen Rechner simuliert. Alle Verfahren zur künstlichen Reproduktion von räumlichen Bildern basieren darauf, dem linken und dem rechten Auge des Betrachters ein jeweils eigenes Bild mit der passenden Perspektive zuzuführen.

Entsprechende Darstellungssysteme, mit Hilfe derer ein Bild in das entsprechende Auge geführt wird, haben es also stets mit zweierlei Bildinformationen zu tun. Hierbei wird das Kernproblem der Bilderzeugung in den verschiedenen Darstellungssystemen auf unterschiedliche Weise gelöst. Das Resultat sind zwei Versionen eines ursprünglichen Bildes, die sogenannten stereoskopischen Bilder, jeweils für das rechte und das linke Auge. Die Darstellungssysteme arbeiten oft mit betrachterseitigen Hilfsmitteln, zum Beispiel mit Brillen. Eine breite Palette an betrachterseitigen Hilfsmitteln wird zur Zeit angeboten. Für die meisten Anwendungen bietet sich der Einsatz von den sogenannten Shutter-Brillen an, trotz des hohen Herstellungsaufwands. Die Shutter-Brillen bestehen in der Regel aus einem Flüssigkeitskristallverschluß vor jedem Auge. Die stereoskopischen Bilder, die ein Stereopaar ergeben, geben den Blick für das linke beziehungsweise rechte Auge jeweils abwechselnd in schneller Folge frei und werden dann wieder abwechselnd schwarzgeschaltet. Im gleichen Rhythmus wechselt ebenfalls auf einem Ausgabegerät, zum Beispiel auf einem Computermonitor, die Bildperspektive. Aufgrund der Tatsache, dass der Wechsel der Bilder sich sehr schnell, das heißt ab 25 mal pro Sekunde, vollzieht, empfindet der Betrachter die Darstellung als gleichzeitig und dies führt zu der Entstehung eines dreidimensionalen Eindrucks.

Eine Voraussetzung für die Entstehung eines dreidimensionalen Eindrucks ist die Bereitstellung der für diesen Zweck entwickelten Anwendungen. Eine vergleichsweise geringe Anzahl von Softwareprodukten unterstützt jedoch zur Zeit die stereoskopische Form der Bilddarstellung. Der Grund hierfür ist eine aufwendige Kombination aus Software und Hardware, die zur Erzeugung eines dreidimensionalen Eindruckes notwendig ist. Hierbei sind die Grundzüge der Entwicklung der Software prinzipiell anders, und zusätzlich ist eine individuelle Anpassung der Software zu der zur Verfügung stehenden Hardware erforderlich. Eine stereoskopische Bilddarstellung wird oft alternativ mit dem Begriff dreidimensional verwendet.

Eine breite Palette an Anwendungen stellen die sogenannten Heimanwendungen, insbesondere die Computerspiele, dar. Diese sind hauptsächlich für einen monokularen Einsatz vorgesehen, insbesondere heißt das für eine flache Darstellung auf einem Ausgabegerät. Diese Anwendungen werden im Weiteren als monokulare Anwendungen bezeichnet.

Um die Entwicklung der Anwendungen zu erleichtern, werden den Entwicklern benutzerfreundliche, vorzugsweise standardisierte, Programmierschnittstellen zur Verfügung gestellt. Als Beispiele für diese Art von standardisierten Programmierschnittstellen stehen das OpenGL von Silicon-Graphics, "OpenGL(r) 1.2 Programming Guide, Third Edition: The Official Guide to Learning OpenGL" von Mason Woo, Jackie Neider, Tom David, Dave Shriner, OpenGL Architecture Review Board, Tom Davis, Dave Shreiner oder das DirectX von Microsoft, das beispielhaft in "Cutting Edge Direct 3D Programming" von Stan Trujillo beschrieben ist. Mit diesen Mitteln ist es einerseits leichter die Anwendungen zu entwickeln, anderseits jedoch ist der Entwickler auf die von der standardisierten Programmierschnittstelle zur Verfügung gestellten Mechanismen angewiesen. Das bedeutet, wenn der stereoskopische Modus von einer standardisierten Programmierschnittstelle nicht unterstützt ist, dann ist es nicht möglich, eine stereoskopische Anwendung auszuführen. Die neuesten Versionen der standardisierten Programmierschnittstellen weisen die Fähigkeit der Unterstützung eines stereoskopischen Modus auf. Diese Fähigkeit kann jedoch nicht von den bereits existierenden Anwendungen, die für einen monokularen Betrieb entwickelt wurden, ausgenutzt werden.

Eine Möglichkeit der Realisierung eines stereoskopischen Modus ist ein direkter Zugriff auf die zur Verfügung stehende Hardware. Dies erfordert jedoch einen hohen Modifikationsaufwand, denn es ist notwendig, jede Hardware, die letztendlich eine individuelle Lösung darstellt, zwecks der Unterstützung eines stereoskopischen Betriebs zu modifizieren.

WO-A-95 26000 beschreibt ein System mit einem Simulator zur Simulation eines speziellen Prozessors, der besondere Teile eines Programms ausführt, und mit einem gewöhnlichen Prozessor für nicht-spezifische Teile des Programms.

Demgemäß ist es die Aufgabe der vorliegenden Erfindung, eine Methode und eine Vorrichtung zu schaffen, die eine stereoskopische Darstellung von monokularen Anwendungen gewährleisten.

Dies wird erfindungsgemäß gelöst durch die Lehre des Patentanspruches 1 und durch die Lehre des Patentanspruches 19.

Vorteilhaft erweist sich hierbei, dass die Erfindung eine hardware-unabhängige Realisierung bereitstellt.

Weitere vorteilhafte Ausgestaltung der Erfindung ergibt sich aus den Patentansprüchen 2 bis 18 und den Patentansprüchen 20 und 21.

Im Folgenden wird die Erfindung anhand von Ausführungsbeispielen und einer Figur näher erläutert.

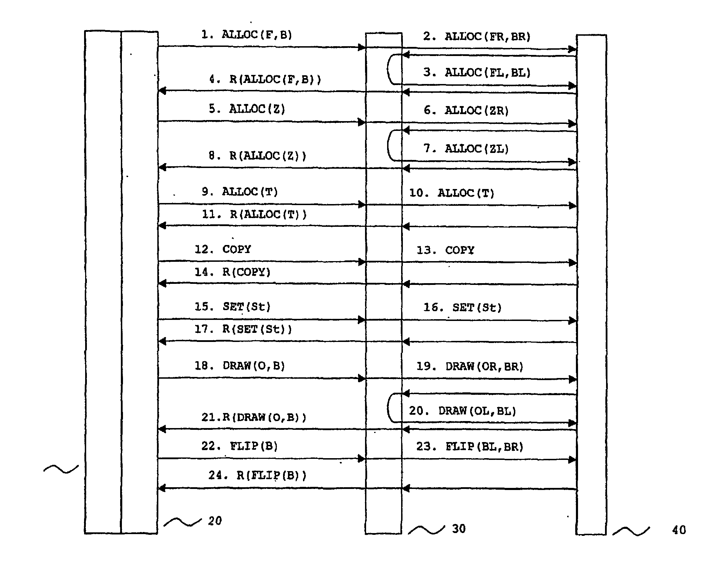

Die Fig.1 zeigt ein erfindungsgemäßes Ausführungsbeispiel.

Im Folgenden wird die Erfindung anhand eines bevorzugten Ausführungsbeispieles erläutert.

Zwecks einer hardware-unabhängigen Realisierung einer stereoskopischen Darstellung für eine monokulare Anwendung wird zwischen einem Treiber und der Anwendung eine weitere Einheit bereitgestellt. Die stereoskopische Darstellung wird erzielt, indem die stereoskopischen Bilder in der weiteren Einheit bereitgestellt und mittels einer erweiterten Umschaltfunktion zu der stereoskopischen Darstellung gebracht werden. Um dies zu realisieren, werden von der monokularen Anwendung Aufrufe an die weitere Einheit übergeben. Diese werden in der weiteren Einheit untersucht und entsprechend behandelt. Das heißt, falls die weitere Einheit feststellt, dass es sich um einen Aufruf handelt, der separat für die stereoskopischen Bilder durchzuführen ist, wird eine entsprechende Umwandlung des Aufrufes vorgenommen, um eine separate Ausführung des Aufrufes in dem Treiber für die stereoskopischen Bilder zu erzielen. Dies kann entweder durch eine Umwandlung in einen weiteren Aufruf, der zum Beispiel eine erweiterte Parameterliste enthält oder durch eine Umwandlung in mehrere weitere Aufrufe, die mehrmals von der weiteren Einheit an den Treiber versendet werden, realisiert werden. Handelt es sich bei dem von der Anwendung an die weitere Einheit übergebenen Aufruf um einen Aufruf, der bei einer einmaligen Ausführung eine gleichzeitige Auswirkung auf die stereoskopischen Bilder aufweist, wird dieser an den Treiber weitergeleitet. Die Umwandlung der Aufrufe basiert auf dem verwendeten Verfahren zur Bereitstellung der stereoskopischen Bilder, wobei die Bilder jeweils dem rechten und dem linken Auge separat zugeführt werden. Die Ausführung der Aufrufe in dem Treiber führt zur Erzeugung der stereoskopischen Bilder in einer Hardware. Die auf diese Weise erzeugten stereoskopischen Bilder werden mit einer erweiterten Umschaltfunktion zu einer stereoskopischen Darstellung gebracht. Die erweiterte Umschaltfunktion stellt die Möglichkeit des Umschaltens zwischen den angezeigten und den erzeugten stereoskopischen Bildern bereit. Zwecks der Gewährleistung einer störungsfreien Darstellung der Bilder erfolgt in den meisten Fällen die Erzeugung der Bilder im Hintergrund, während einem Betrachter fertig erzeugte Bilder angezeigt werden.

Aus dieser Erläuterung geht hervor, dass, um die Modifikationen bezüglich des Betriebsmodus einer Anwendung - monokular oder stereoskopisch - durchzuführen, ohne dass hierbei die Anwendung beziehungsweise die Hardware verändert werden muss, zwischen der Anwendung und der Hardware eine zusätzliche Einheit eingebaut wird. Die Aufgabe dieser zusätzlichen Einheit, die im Weiteren durch den Namen Zwischenstufe identifiziert wird, ist es, die von einer Anwendung erhaltenen Aufrufe zu interpretieren und entsprechend aufzuarbeiten mit dem Ziel, eine stereoskopische Darstellung zu realisieren. Die Aufarbeitung der Aufrufe bleibt hierbei sowohl für die monokulare Anwendung als auch für die Hardware transparent. Die stereoskopische Darstellung wird durch die Erzeugung von stereoskopischen Bildern erzielt, die dann dem Betrachter zugeführt werden. Die Bereitstellung der stereoskopischen Bilder wird in der weiteren Einheit durchgeführt und ihre Erzeugung findet in der Hardware statt. Die Darstellung der Bilder wird mittels einer erweiterten Umschaltfunktion erzielt, die von der weiteren Einheit angewendet wird.

Um dies zu realisieren werden die Aufrufe, die von einer Anwendung bereitgestellt werden, mit Mitteln zum Empfangen eines Aufrufes von der weiteren Einheit empfangen. Diese Aufrufe werden untersucht mit Mitteln zur Untersuchung eines Aufrufes und im Falle, dass es sich um einen Aufruf handelt, der separat für die stereoskopischen Bilder durchzuführen ist, wird dieser in einen oder mehrere weitere Aufrufe umgewandelt mit Mitteln zur Umwandlung eines Aufrufes in einen oder mehrere weitere Aufrufe. Im Falle, dass es sich um einen Aufruf handelt, der bei einmaliger Ausführung in dem Treiber sich auf die stereoskopischen Bilder auswirkt, wird dieser mit Mitteln zur Weiterleitung eines Aufrufes an den Treiber weitergeleitet. Die Aufrufe werden von der weiteren Einheit an den Treiber mit Mitteln zum Versenden weitergegeben. Die Resultate des ausgeführten Aufrufes werden in der weiteren Einheit mit Mitteln zur Behandlung verarbeitet und an die Anwendung übergeben. Die erzeugten stereoskopischen Bilder werden mit Mitteln zur Realisierung einer Umschaltfunktion zur Darstellung gebracht.

Im Folgenden wird die Erzeugung der stereoskopischen Bilder aus einer monokularen Anwendung anhand eines Verfahren zur graphischen Datenverarbeitung näher erläutert.

Ausgangspunkt der Betrachtungen ist in der Regel eine Szene aus der Realität oder eine Vorstellung einer am Rechner darzustellenden realen Szene, zum Beispiel für ein Computerspiel. Beispielhaft wird im Folgenden von einer darzustellenden Szene ausgegangen. Das Verfahren, das zu der Entstehung eines Bildes auf einem Ausgabegerät aus einer darzustellenden Szene führt, kann beispielhaft durch die folgenden drei Schritte beschrieben werden. Im ersten Schritt wird aus einer darzustellenden Szene mittels eines Modellierungsverfahrens ein dreidimensionales Modell der darzustellenden Szene erzeugt. Im zweiten Schritt erfolgt eine Abbildung dieses Modells auf einen zweidimensionalen virtuellen Bildraum, in dem die Erzeugung eines zweidimensionalen virtuellen Bildes erfolgt. Dieser Schritt wird mittels eines Verfahrens, der sogenannten Transformation realisiert. Im dritten Schritt erfolgt die Rasterkonvertierung eines virtuellen Bildes und die Darstellung eines Bildes auf einem rasterorientierten Ausgabegerät. Als Beispiel für ein rasterorientiertes Ausgabegerät dient ein Monitor eines Rechners.

Zwecks der Erläuterung der Erfindung wird im Folgenden beispielhaft ein Stapel von Einheiten mit ihren Abhängigkeiten eingeführt, die eingesetzt werden können, um eine erfindungsgemäße Realisierung des Verfahrens zu einer nachträglichen Erzeugung von stereoskopischen Bildern zu gewährleisten.

Der Stapel kann aus mehreren, beispielsweise fünf, Einheiten bestehen. Dies sind Anwendung, Programmierschnittstelle, Zwischenstufe, Treiber und Hardware. Hierbei stellt die Anwendung die oberste Einheit des Stapels und die Hardware die unterste dar.

Die Anwendung stellt ein Bild bereit, das mittels entsprechender Operationen informatisch beschrieben ist. Die Anwendung kommuniziert direkt mit einer Programmierschnittstelle. Diese Einheit stellt eine Programmierschnittstelle zu einem Treiber dar, die die Aufrufe einer Anwendung in Treiberaufrufe umwandelt und diese an einen Treiber freigibt. Als Beispiel für eine standardisierte Programmierschnittstelle wird für die vorliegende Erfindung die DirectX-Programmierschnittstelle herangezogen, die aus einem Satz von Treiberaufrufen besteht.

In dem speziellen Fall tragen diese den Namen DirectX-Aufrufe. Dies soll jedoch lediglich als bevorzugtes Beispiel betrachtet werden und somit keine Einschränkung für die Realisierung der Erfindung ergeben. Eine andere Möglichkeit stellt zum Beispiel die OpenGL-Programmierschnittstelle dar. Die Treiberaufrufe der Programmierschnittstelle werden von der Zwischenstufe abgefangen und entsprechend bearbeitet, um als Ergebnis die Darstellung der stereoskopischen Bilder zu erzielen. Die Treiberaufrufe werden jedoch insoweit bearbeitet, dass diese weiterhin geräteunabhängig verbleiben. Nach ihrer Bearbeitung werden diese dem Treiber übergeben. Die geräteunabhängigen Treiberaufrufe werden von einem Treiber in geräteabhängige Hardwareaufrufe übersetzt, mit Hilfe derer das Bild auf einem Gerät dargestellt wird. Eine Hardware repräsentiert die letzte Einheit des Stapels. Hierbei handelt es sich vorzugsweise um die sogenannte Rasterisierungseinheit(Rasterize Device) mit einem lokalen Speicher. In dieser Einheit erfolgt unter anderem die Abspeicherung fertiger Bilder in der lokalen Speichereinheit, die von der Rasterisierungseinheit aus einem als Eingabe erhaltenen Bild erzeugt werden. Bei dem erhaltenen Bild kann es sich entweder um ein virtuelles Bild oder um ein geometrisches Modell mit der zugehörigen Transformationsmatrix handeln. Die zwei Möglichkeiten werden im Weiteren erläutert. Zwecks der Darstellung der fertigen Bilder auf einem Ausgabegerät werden diese aus der lokalen Speichereinheit ausgelesen und beispielsweise in Form eines Videosignals an das Ausgabegerät übergeben.

In einem weiteren Beispiel eines Stapels von Einheiten, die eingesetzt werden können, um eine erfindungsgemäße Realisierung des Verfahrens zu einer nachträglichen Erzeugung von stereoskopischen Bildern zu gewährleisten, ist es vorgesehen, die Zwischenstufe zwischen einer Anwendung und einer Programmierschnittstelle zu plazieren. Das heißt,die oberste Einheit stellt die Anwendung dar. Unter der Anwendung wird dann die Zwischenstufe plaziert, die mit der Programmierschnittstelle kommuniziert. Diese steht dann in Verbindung mit einem Treiber, der direkt mit einer Hardware kommuniziert. In diesem Beispiel interpretiert die Zwischenstufe die Aufrufe einer Anwendung und wandelt diese in Aufrufe um, die an die Programmierschnittstelle übergeben werden und auf der Hardwareebene einen stereoskopischen Effekt hervorrufen. Im Weiteren wird näher auf das erste Beispiel, in dem die Zwischenstufe zwischen einer Programmierschnittstelle und einem Treiber plaziert ist, eingegangen. Ein ähnlicher Ablauf ist jedoch im Falle des Vertauschens der Position der Programmierschnittstelle und der Zwischenstufe durch die erfindungsgemäße Vorgehensweise gewährleistet.

Im Folgenden wird auf die einzelnen Schritte der Erzeugung der stereoskopischen Bilder mit Einbeziehung der oben erläuterten Einheiten näher eingegangen.

Das geometrische Modellieren umfasst die Theorie, die Techniken und die Systeme für eine rechnergestützte Beschreibung und Darstellung dreidimensionaler Objekte. Es existiert eine große Anzahl an Modellierungsverfahren. Auf diese wird jedoch an dieser Stelle nicht näher eingegangen, da sie dem Fachmann bekannt sind. Das Resultat eines Modellierungsverfahren ist ein Modell, dessen Eigenschaften, wie zum Beispiel Volumen oder Oberfläche, geometrisch berechnet werden. Weiterhin kann das Objekt durch weitere graphische Effekte, wie beispielsweise Schattierung oder Spiegelung, beschrieben werden. Zusätzliche Darstellungsinformationen betreffend die Oberflächen von Objekten, heißen Texturen. Aufgrund der Tatsache, dass die Texturen nicht von einem Objekt losgelöst sind, sondern als Teil eines Objektes betrachtet werden können, ist es zweckmäßig, dass diese automatisch bei den folgenden Schritten der Bildverarbeitung berücksichtigt werden.

Das Ergebnis eines Modellierungsverfahren ist ein berechnetes dreidimensionales Modell einer darzustellenden Szene. Dieses Modell, das vorerst abstrakt beschrieben ist, wird im nächsten Schritt mittels eines Darstellungsschemas in ein virtuelles Bild umgewandelt, das sich in einem Rechner darstellen läßt.

Ein wichtiger Aspekt ist der Aufbau eines Modells, beziehungsweise eines Bildes. Sowohl das Modell einer Szene als auch das virtuelle Bild sind nämlich aus Grundobjekten, den sogenannten graphischen Primitiven, im Weiteren auch als Primitive bezeichnet, aufgebaut. Für das Modell einer Szene bedient man sich dreidimensionaler Primitiver, wie zum Beispiel Quader oder Zylinder. Das virtuelle Bild wird aus zweidimensionalen Primitiven, zum Beispiel Punkten, Linien oder Polygonen erzeugt. Die Beschreibung der Primitive erfolgt vorzugsweise mittels in ihnen enthaltener Eckpunkte oder alternativ mittels anderer ausgezeichneter Punkte. Für die Erläuterung der vorliegenden Erfindung erweisen sich die Dreiecke als eine Form der Polygone, die besonders vorteilhaft ist. Andere Formen sind jedoch auch möglich. Der wesentliche Vorteil einer Darstellung mittels Primitiver liegt in der Möglichkeit der Hardwareunterstützung, die aus den Primitiven schnell und effizient ein Ausgangsbild erzeugen kann.

Das virtuelle Bild ist, wie bereits erwähnt, ein Resultat der Abbildung eines dreidimensionalen Modells auf einen zweidimensionalen virtuellen Bildraum. Das in diesem Zusammenhang zur Verfügung stehende Verfahren heißt Transformation. Ein wesentlicher Bestandteil des Verfahrens ist die Projektion eines dreidimensionalen Objektes auf eine zweidimensionale Projektionsebene. Die Projektion reduziert sich eigentlich auf die Projektion der Eckpunkte der dreidimensionalen Objekte. Das bedeutet, dass Punkte, die mit drei Koordinaten (x,y,z) beschrieben sind, auf zweidimensionale Punkte, die durch zwei Koordinaten (x,y) dargestellt sind, konvertiert werden. Eine mögliche Prokjektionsart, die an dieser Stelle angewendet werden kann, ist die Zentralprojektion, bei der die Perspektive berücksichtigt wird. Das bedeutet, dass Objekte, die vom Betrachter entfernt sind, auf dem Bild kleiner erscheinen als andere Objekte, die sich näher an einem realen oder virtuellen Beobachter befinden. Aus diesem Grund ist es bei dieser Projektionsart vorgesehen, den Beobachterstandpunkt zu berücksichtigen. In diesem Zusammenhang ist oft die Rede von einer Kameraperspektive. Im allgemeinen Fall befindet sich der Beobachter in einem beliebigen Standpunkt, und die Blickrichtung des Beobachters gibt die Lage der Projektionsebene, auf die die Abbildung eines dreidimensionalen Objektes erfolgt.

Die Transformation beinhaltet nicht ausschließlich eine Projektion. Die Modelle einer virtuellen Welt können außerdem skaliert, rotiert oder verschoben werden. Diese Operationen werden mittels entsprechender mathematischer Techniken, beispielsweise mittels Matrizen, den sogenannten Transformationsmatrizen, realisiert, indem die Eckpunkte eines Modells mit einer oder mehreren entsprechenden Transformationsmatrizen multipliziert werden. Eine Reihe von Transformationen, die auf ein Modell anzuwenden sind, werden oft zu einer Transformationsmatrix zusammengefasst, indem die einzelnen Matrizen miteinander multipliziert werden. Die auf diese Weise erzeugte Transformationsmatrix wird dann auf alle Eckpunkte eines Modells angewendet. Hierbei ist es vorteilhaft, dass in einer Transformationsmatrix die Kameraperspektive berücksichtigt ist. Das bedeutet, dass durch eine entsprechende Modifikation der Matrix die Veränderung der Kameraperspektive erreicht wird. An dieser Stelle wird ein Unterschied in der Entwicklung einer monokularen und einer stereoskopischen Anwendung gemacht. Die stereoskopischen Anwendungen erzeugen nämlich an dieser Stelle für die verschiedenen Blickrichtungen des Beobachters zwei getrennte Bilder, jeweils für das rechte und das linke Auge. Dies kann beispielsweise mittels der Veränderung der Transformationsmatrizen erzielt werden. Bei einer monokularen Anwendung wird lediglich ein Bild für eine Kameraperspektive erzeugt.

In einem weiteren Schritt der Bilderzeugung erfolgt eine Konvertierung eines virtuellen Bildes in ein Bild, das auf einem rasterorientierten Ausgabegerät darstellbar ist. Zu diesem Zweck erfolgt eine sogenannte Rasterkonvertierung, das heißt, die Punkte eines Bildes werden auf ein Pixelsystem abgebildet. Da die Pixel eines Pixelsystems vorzugsweise mittels ganzzahliger Koordinaten beschrieben sind, wird die Position der Bildpunkte auf einem rasterorientierten Ausgabegerät lediglich approximiert. Das auf diese Weise bereitgestellte Bild wird in einem Bildschirmspeicher, dem sogenannten Frame-Puffer, abgespeichert. Das Zeichnen eines virtuellen Bildes auf einem Pixelsystem wird zweckmäßigerweise auf der Hardwareebene realisiert, um die Leistungsfähigkeit der Darstellungssysteme zu steigern.

Bei der Rasterkonvertierung erfolgt zusätzlich unter anderem die Einbeziehung der abgespeicherten Texturen. Hierbei werden die Texturen auf die entsprechende Oberfläche eines Objektes abgebildet. Diese Vorgehensweise ist deswegen möglich, weil zwischen den Primitiven eines Objektes und der zugehörigen Textur eine Relation besteht, die besagt, mit welchem Auszug aus einer Textur die Primitive, die mittels der Eckpunkte mit den vorgegebenen Koordinaten beschrieben sind, zu füllen sind.

Wie oben erwähnt, wird bei einer Projektion ein Punkt, der mittels dreier Koordinaten beschrieben ist, in einen Bildpunkt, der vorzugsweise mittels zweier Koordinaten dargestellt ist, konvertiert. Hierbei wird zur Feststellung der Entfernung eines Bildpunktes bezüglich eines anderen Bildpunktes eine z-Koordinate ausgenutzt. Die z-Koordinate entspricht vorzugsweise einer Entfernung eines Bildpunktes von einem Beobachter. Die Feststellung der Entfernung erfolgt, indem ein z-Wert, der der z-Koordinate entspricht, in einem speziell für diesen Zweck vorgesehenen Speicher, den sogenannten z-Puffer, abgespeichert wird. Die Ermittlung des z-Wertes erfolgt vorzugsweise im Wesentlichen für alle Bildpunkte. Gleichzeitig wird im eigentlichen Bildschirmspeicher die entsprechende Farbe eingetragen. Im Falle, dass ein weiterer Bildpunkt auf eine Position zu zeichnen ist, auf der ein anderer Bildpunkt bereits eingetragen ist, werden die z-Werte der beiden Bildpunkte verglichen. Liegt der zu zeichnende Bildpunkt näher an dem Beobachter, werden seine Werte entsprechend in den Bildschirmspeicher und in den z-Puffer eingetragen. Stellt der Vergleich jedoch fest, dass der zu zeichnende Bildpunkt dem Betrachter ferner liegt, wird dieser verworfen.

Mit diesem Schritt läßt sich die räumliche Relation der Objekte zueinander bestimmen, das heißt, die näher liegenden Objekte werden für den Betrachter in den Vordergrund gestellt.

Der z-Wert kann ebenfalls für die Erzeugung eines zweiten Bildes für eine stereoskopische Darstellung bei einer vorliegenden monokularen Anwendung genutzt werden. Bei der Erzeugung von zwei separaten Bildern jeweils für das rechte und das linke Auge werden die Eckpunkte aller Primitive eines virtuellen Bildes horizontal nach links für das eine und nach rechts für das andere Auge um einen bestimmten Wert verschoben.

Wenn die auf diese Weise erzeugten Bilder den Augen zugeführt werden, dann richten sich die Augen zuerst auf die auf der Oberfläche des Ausgabegerätes erschienenen Objekte eines Bildes, um sich dann letztendlich hinter der Oberfläche des Ausgabegerätes zu synchronisieren. Durch Einsatz dieser Methode wird der Tiefeneindruck erzeugt. Falls es das Ziel ist, die Objekte eines Bildes hinter der Oberfläche eines Ausgabegerätes dem Beobachter erscheinen zu lassen, dann ist es vorteilhaft, die Objekte für das rechte Auge nach rechts und für das linke nach links zu verschieben. Im Falle, dass die Objekte vor der Oberfläche eines Ausgabegerätes dem Betrachter darzustellen sind, werden diese für das rechte Auge nach links und für das linke Auge nach rechts verschoben.

Im Folgenden werden zwei Methoden vorgestellt, mit deren Hilfe die Ermittlung des Wertes ermöglicht wird, um den die Objekte zwecks der stereoskopischen Darstellung zu verschieben sind.

Die erste Methode basiert auf dem z-Wert. Wie bereits erwähnt, enthält ein z-Puffer die z-Werte aller Eckpunkte der Primitiven und mittels der z-Werte ist die räumliche Relation der Objekte zueinander beschrieben. Die Primitive bilden wiederum ein Objekt. Der Abstand, um den die Bilder verschoben werden, wird aus den z-Werten ermittelt, indem die Eckpunkte, die einen z-Wert aufweisen, der besagt, dass diese Eckpunkte tiefer liegen, um einen entsprechend größeren Abstand verschoben werden als die Bildpunkte, die dem Betrachter näher präsentiert werden sollen. Diese werden nämlich entweder um einen kleineren Wert verschoben oder im Falle, dass sie vor der Oberfläche eines Ausgabegerätes erscheinen sollen, um einen Abstand in die entgegengesetzte Richtung, das heißt, für das linke Auge nach rechts und für das rechte nach links, verschoben. Dieses Verfahren kann in der Zwischenstufe eingesetzt werden, um die stereoskopischen Bilder bereitzustellen. Aus einem von der Anwendung erhaltenen virtuellen Bild werden anhand dieser Methode zwei Bilder, jeweils für das rechte und das linke Auge, erstellt.

Eine weitere Methode ist besonders bei einer Hardware anzuwenden, die über die Fähigkeit verfügt, die Transformation lokal durchzuführen. Diese Hardware stellt die Möglichkeit der Durchführung der Transformation bereit, das heißt, die Erstellung eines transformierten geometrischen Modells. Um dies zu realisieren, erhält die Hardware ein geometrisches Modell und eine Matrix, mit der das Modell zu transformieren ist. Diese Methode kann von der Zwischenstufe für die nachträgliche Bereitstellung der stereoskopischen Bilder verwendet werden. Zu diesem Zweck wird die Matrix in der Zwischenstufe modifiziert, indem für die in der Matrix berücksichtigte Kameraperspektive, genaugenommen die Kameraposition und die Blickrichtung für ein Bild, derart verändert wird, dass aus einem Bild zwei Bilder aus verschiedenen Kameraperspektiven, jeweils für das rechte oder das linke Auge, bereitgestellt werden. Die auf diese Weise bereitgestellten Bilder werden der Hardware übergeben, die für die Erstellung der Bilder und ihre Darstellung verantwortlich ist.

Im Folgenden wird eine besonders vorteilhafte Ausführungsform der Erfindung dargestellt. Zu diesem Zweck wird eine Kommunikation zwischen den involvierten Einheiten mit den entsprechenden Aufrufen untersucht.

Figur 1 stellt die Einheiten und die auszutauschenden Nachrichten schematisch dar. Das gemäß Figur 1 angegebene Beispiel sieht vor, die Zwischenstufe zwischen einer Programmierschnittstelle 20 und einem Treiber 40 zu plazieren. Die Anwendung 10 kommuniziert mit der Programmierschnittstelle 20. Die Schritte des bevorzugten erfindungsgemäßen Verfahrens sind aufsteigend von 1 bis 24 durchnummeriert. Die Pfeile deuten auf die Richtung der zu versendenden Aufrufe.

Mit einem ersten Aufruf, den die Zwischenstufe 30 von der Anwendung 10 über die Programmierschnittstelle 20 erhält, wird zuerst untersucht, ob die Anwendung für einen monokularen oder einen stereoskopischen Betrieb entwickelt wurde. Im Falle, dass es sich um eine Anwendung handelt, die eine stereoskopische Darstellung unterstützt, werden die Aufrufe einer Programmierschnittstelle zu einem Treiber durchgeschaltet, andernfalls wird eine geeignete Umwandlung vorgenommen. Die Erkennung erfolgt beispielsweise bei Allokierung des Speichers für die Erzeugung der Bilder. Der Speicherbereich, der genau für ein Bild vorgesehen ist, wird im Weiteren als Bildspeicher oder Bildpuffer bezeichnet. Bei einer monokularen Anwendung werden entweder zwei oder drei Bildpuffer angefordert. Anhand dieser Zahl kann der Modus der Anwendung - monokular oder stereoskopisch - ermittelt werden. Bei einer stereoskopischen Anwendung ist die Zahl der angeforderten Bildpuffer vorzugsweise größer als drei.

Im Weiteren wird die DirectX-Programmierschnittstelle als Beispiel für eine Programmierschnittstelle verwendet. Die Aufrufe dieser Programmierschnittstelle, die hier beispielhaft herangezogen werden, entsprechen jedoch nicht dem tatsächlichen Aufbau der DirectX-Aufrufe. Dieser wurde nämlich zwecks der Erläuterung vereinfacht dargestellt.

Im Falle, dass die Zwischenstufe die Anwendung als eine monokulare Anwendung erkennt, werden gemäß Figur 1 die folgenden Schritte ausgeführt.

Im ersten Schritt wird die Allokierung des Speichers in der Speichereinheit von einer Anwendung aus initiiert. Die Initiierung einer Nachricht bedeutet somit im konkreten Sinne die Ausführung entsprechender Aufrufe auf der Anwendungsebene. Die Programmierschnittstelle, beispielsweise die DirectX-Programmierschnittstelle, führt die Umwandlung der Aufrufe in die Treiberaufrufe durch. Das Resultat der Umwandlung ist ein Treiberaufruf ALLOC(F,B), der der Zwischenstufe übergeben wird. Gemäß Figur 1 erfolgt dies im Schritt 1. Der Treiberaufruf wird von der Zwischenstufe empfangen und untersucht. Die Untersuchung des Treiberaufrufes ist notwendig, um die entsprechende Behandlung durchzuführen. Der Treiberaufruf ALLOC ist zur Allokierung des Speichers für die Bildpuffer zuständig. Wie bereits erwähnt, variiert die Zahl der benötigten Bildpuffer zwischen zwei und drei. Im ersten Fall wird zwischen einem sogenannten Frontpuffer und einem sogenannten Hintergrundpuffer unterschieden. Im zweiten Fall werden ein Frontpuffer und zwei Hintergrundpuffer zur Verfügung gestellt.

Im monokularen Modus wird in dem Frontpuffer das Bild, das gerade angezeigt wird, abgespeichert und in dem Hintergrundpuffer wird das folgende Bild, das im nächsten Schritt angezeigt wird, erzeugt. Mittels eines entsprechenden Aufrufes werden die Inhalte der zwei Bildpuffer vertauscht. Diese Vorgehensweise wird auf der Hardwareebene zur Zeit eingesetzt, um einen störungsfreien Effekt zu erzeugen. Wenn der zweite Hintergrundpuffer angefordert wurde, wird er für die Erzeugung eines weiteren, vorzugsweise nachfolgenden Bildes verwendet und zwar für die Zeit, in der der Frontpuffer und der Hintergrundpuffer die Inhalte austauschen. Auf diese Weise kann die zeit-effektive Arbeitsweise verbessert werden. Im Weiteren wird das Ausführungsbeispiel anhand von zwei Bildpuffern dargestellt. Hiermit soll jedoch keine Einschränkung für die vorliegende Erfindung gegeben werden.

In der erfindungsgemäßen Vorgehensweise erfolgt die Allokierung der Bildpuffer separat für die stereoskopischen Bilder, die dann separat dem entsprechenden Auge zugeführt werden. Das heißt, es werden sowohl zwei Bildpuffer für das eine als auch zwei weitere Bildpuffer für das andere Auge allokiert, um einen stereoskopischen Effekt zu erzeugen. Zwecks der Vereinfachung der Terminologie werden im Weiteren Ausdrücke über die Vorgehensweise für das linke und/oder das rechte Auge, zum Beispiel Allokierung des Bildspeichers für das linke Auge, benutzt.

Die Realisierung der doppelten Allokierung von zwei Bildpuffern wird auf folgende Weise durchgeführt. Nach der Durchführung des Aufrufes, ALLOC(FR,BR) im Schritt 2, der aus dem Treiberaufruf ALLOC (F,B) umgewandelt wurde, wird das Ergebnis, nämlich die Adresse des allokierten Bildspeichers FR, BR für das eine Auge, zwischenzeitlich in der Zwischenstufe gespeichert, um den gleichen Aufruf, diesmal für das andere Auge, noch einmal durchzuführen. Dies erfolgt im Schritt 3 mit der Versendung von ALLOC(FL,BL). Im Folgenden wird angenommen, dass zuerst der Frontpuffer FR und der Hintergrundpuffer BR für das rechte Auge allokiert werden und im nächsten Schritt eine Allokierung von zwei Bildpuffern, FL, BL für das linke Auge durchgeführt wird.

Mit Schritt 4, R(ALLOC(F,B)), wird als Rückgabewert für die Anwendung der Speicherplatz für den Frontpuffer und den Hintergrundpuffer, die für ein Auge allokiert wurden, zurückgegeben, und die Parameter der Bildpuffer für das andere Auge werden in der Zwischenstufe gespeichert. Eine andere Möglichkeit ist es, die Adressen des Speicherplatzes für den Frontpuffer und Hintergrundpuffer für das eine Auge, zum Beispiel für das linke, an die Rückgabewerte der Bildpuffer für das andere Auge, zum Beispiel für das rechte, die an die Anwendung zurückgegeben werden, derart anzuhängen, dass sie für die DirectX-Programmierschnittstelle und die Anwendung transparent bleiben. Diese Parameter können bei den folgenden Treiberaufrufen in der Zwischenstufe aus den übergebenen Daten entnommen werden.

Gemäß Figur 1 wird als nächstes die Allokierung des Speicherbereichs für den z-Puffer durchgeführt. Das wird erreicht, indem in Schritt 5 die DirectX-Programmierschnittstelle den Treiberaufruf ALLOC(Z) an die Zwischenstufe verschickt. Nach der Durchführung der Allokierung hat die Zwischenstufe die Kenntnis erlangt, dass es sich bei dem vorliegenden Fall um den stereoskopischen Modus handelt, und aus diesem Grund die Zwischenstufe die Allokierung eines zweiten z-Puffers initiiert. Dies erfolgt auf ähnliche Weise wie bei der Allokierung der Bildpuffer. Das heißt, es wird zuerst ein z-Puffer für das rechte Auge, Schritt 6, und dann für das linke Auge, Schritt 7, allokiert. Als Rückgabewert, R(ALLOC(Z)) im Schritt 8, erhält die DirectX-Programmierschnittstelle beispielsweise die Adresse des Speicherbereichs für das rechte Auge und die Adresse des Speicherbereichs für das linke Auge wird in der Zwischenstufe verwaltet, oder - wie oben beschrieben - wird die Adresse des Speicherbereichs für das rechte Auge an die Rückgabewerte für die Anwendung angehängt. Es ist an dieser Stelle zu vermerken, dass die Allokierung des zweiten z-Puffers in den Fällen erforderlich ist, in denen das Zeichnen eines ganzen Bildes mit einem einzigen Treiberaufruf nicht möglich ist, das heißt, wenn die Zeichenoperation aus mehreren Zwischenschritten des Zeichnens besteht.

Bei dem erwähnten Treiberaufruf ALLOC handelt es sich um einen Aufruf, der separat für die stereoskopischen Bilder in einem Treiber auszuführen ist. Das heißt, es erfolgt eine Ausführung der Allokierung des Speicherbereiches für das linke Auge und separat für das rechte Auge. Weitere Aufrufe dieser Art sind zum Beispiel der Treiberaufruf DRAW oder FLIP. Diese werden im Weiteren erläutert. Im Folgenden werden Aufrufe behandelt, deren einmalige Durchführung im Treiber sich gleichzeitig auf die stereoskopischen Bilder und somit gleichzeitig auf beide Augen auswirkt.

Die Allokierung des Speicherbereiches für Texturen wird für die beiden Augen, das heißt, entsprechend für die stereoskopischen Bilder, nur einmal durchgeführt, denn die Art und Weise, wie die Oberfläche der Objekte gefüllt ist, bleibt bei Erzeugung von separaten Bildern für beide Augen unverändert. Die Allokierung des Speicherbereichs für Texturen wird gemäß Figur 1 in den Schritten 9 und 10 realisiert. Zuerst, Schritt 9, wird der Treiberaufruf ALLOC(T) an die Zwischenstufe versendet, um im Schritt 10 den gleichen Aufruf an den Treiber weiterzuleiten. Hierbei kann sich die Allokierung des Speicherbereichs auf mehrere Texturen beziehen, das heißt, es wird so viel Speicher allokiert, wie es der Anzahl der Texturen, die in den Speicher zu laden sind, entspricht. Die Adresse des allokierten Speichers wird durch die DirectX-Programmierschnittstelle an die Anwendung im Schritt 11 mit R(ALLOC(T)) weitergeleitet. Die Allokierung des Speicherbereiches für Texturen erfolgt einmal für die stereoskopischen Bilder, das heißt, für beide Augen. Ebenfalls das Kopieren, COPY in Schritt 12, von bestimmten Daten, zum Beispiel das Kopieren der Texturen in den allokierten Speicher, erfolgt einmal. Aus diesem Grund wird im Schritt 13 der Treiberaufruf COPY an den Treiber weitergeleitet. Das Ergebnis R(COPY) wird im Schritt 14 der Anwendung mitgeteilt. Mit dem Treiberaufruf SET(St), Schritt 15, werden die Zeichnungsoperationen gesetzt, so dass eine Art und Weise vereinbart wird, wie die nachfolgenden Zeichnungsoperationen durchzuführen sind. Eine beispielhafte Vereinbarung kann die Festlegung der für die nachfolgenden Zeichnungsoperationen verwendbaren Textur beinhalten. Ähnlich wie bei dem Treiberaufruf COPY wird ebenfalls in diesem Fall der Treiberaufruf SET(St) nur einmal durchgeführt, denn die getroffenen Vereinbarungen, beispielsweise bezüglich der benutzten Texturen, gelten für beide Augen. Gemäß Figur 1 wird das Setzen der Zeichnungsoperationen mit den Schritten 15, 16, 17 realisiert. Bei dieser Art der Treiberaufrufe, zum Beispiel bei dem Treiberaufruf COPY oder SET, genügt eine einmalige Durchführung der Aufrufe in dem Treiber, um eine Auswirkung auf die stereoskopischen Bilder zu erreichen. Das heißt, diese Aufrufe werden nicht separat für beide Bilder ausgeführt.

Mit dem Treiberaufruf DRAW wird das Zeichnen eines Bildes initiiert. An dieser Stelle ist die Zwischenstufe für die Bereitstellung von zwei separaten Bildern aus einem virtuellen Bild, das von der Anwendung übergeben wird, zuständig. Nach Empfang des Treiberaufrufes DRAW(O), Schritt 18, wird in der Zwischenstufe mit dem Zeichnen von zwei separaten Bildern begonnen. Die Verfahren, die für die Bereitstellung von zwei Bildern für die zwei Augen vorzugsweise verwendet werden können, wurden oben beschrieben. Hierbei kann zum Beispiel das Verfahren, das auf der Ausnutzung des z-Wertes basiert oder das Verfahren, das die Transformationsmatrix einsetzt, verwendet werden.

An dieser Stelle wird ebenfalls nicht auf die verschiedenen Verfahren des Zeichnens von Objekten näher eingegangen. Eine Möglichkeit, in der die Verwendung von Primitiven eingesetzt wird, wurde oben ebenfalls genannt. Der Treiberaufruf DRAW kann beispielsweise aus mehreren Zwischenschritten bestehen, mit denen die einzelnen Primitive gemalt werden. Jeder Treiberaufruf, der sich auf das Zeichnen eines Objektes bezieht, wird von der Zwischenstufe entsprechend modifiziert, so dass als Ergebnis zwei Zeichnungsfunktionen, jeweils für das rechte und das linke Auge, DRAW(OL,BL), aufbereitet werden, die dann das Zeichnen der Objekte in den entsprechenden Hintergrundpuffern, hier Hintergrundpuffer für das rechte und Hintergrundpuffer für das linke Auge, anleiten. Schematisch ist dies in Figur 1 mit der Durchführung der Schritte 19 und 20 dargestellt, indem im Schritt 19 das Zeichnen für das rechte Auge mit der Versendung des Aufrufes DRAW(OR,BR) inittiert wird und mit der Versendung des Aufrufes DRAW(OL,BL) im Schritt 20 das Zeichnen für das linke Auge angeleitet wird. Das Resultat wird der Anwendung durch einen weiteren Schritt 21 mit dem Aufruf R(DRAW(O,B)) mitgeteilt.

Nach der Erzeugung von zwei kompletten Bildern in den entsprechenden Hintergrundpuffern wird das Ersetzen der Bilder, die auf einem Ausgabegerät angezeigt werden, durch die im Hintergrundpuffer erzeugten Bilder mittels einer Umschaltfunktion durchgeführt. Gemäß Figur 1 erfolgt dieser Vorgang mittels eines Treiberaufrufs FLIP(B) in Schritt 22. Bei den neuesten Treibern handelt es sich hierbei um eine erweiterte Umschaltfunktion gemäß Figur 1 um einen erweiterten Treiberaufruf FLIP. Zweckmäßigerweise wird als Parameter in diesem Treiberaufruf der Hintergrundpuffer angegeben, mit dem der Inhalt des Frontpuffers getauscht werden soll. In der erweiterten Umschaltfunktion werden in einem Aufruf beide Hintergrundpuffer als Parameter angegeben. Schematisch ist dies in Figur 1 im Schritt 23 mittels des Aufrufes FLIP(BL,BR) dargestellt. Die in den Hintergrundpuffern enthaltenen Bilder werden mit den Bildern des Frontpuffers getauscht und mittels der Shutter-Brillen dem Betrachter zugeführt. Das Ergebnis des Treiberaufrufes R(FLIP(B)) wird mit Schritt 24 der Anwendung mitgeteilt.

Um die Übersichtlichkeit zu erhöhen, ist in Figur 1 nicht dargestellt, dass bei animierten Anwendungen die Treiberaufrufe zum Setzen der Zeichenoperationen und zum Zeichnen, SET und DRAW mehrmals nacheinander durchgeführt werden können. Hierbei, wie bereits erwähnt, erfolgt das Setzen für das Zeichnen eines Objektes einmal und das tatsächliche Zeichnen eines Objektes kann aus mehreren Zwischenschritten bestehen. Nach Beendung eines Zeichnungsvorganges für ein Objekt in den zwei Puffern, die entsprechend für die Darstellung des Objektes für das rechte und für das linke Auge zuständig sind, kann in einem folgenden Schritt das Zeichnen eines nächsten Objektes erfolgen. Hierzu werden wieder zuerst die Zeichnungsoperationen mit einem Treiberaufruf SET gesetzt, um danach mit dem Zeichnen des Objektes mittels des Treiberaufrufs DRAW fortfahren zu können. Dies kann mehrmals ausgeführt werden, zum Beispiel so lange bis eine Szene komplett in den Hintergrundpuffern gezeichnet ist. Nach Fertigstellung einer kompletten Szene wird diese durch die Szene, die zu diesem Zeitpunkt auf einem Ausgabegerät angezeigt wird, ersetzt, um dann mit der Zeichnung der nächsten Szene, erneut mit Verwendung der Treiberaufrufe SET und DRAW anfangen zu können.

Im Folgenden wird ein weiteres Ausführungsbeispiel, ohne Figur, erläutert.

Das oben angegebene Ausführungsbeispiel bezieht sich auf ein von der Zwischenstufe mehrfach an den Treiber erfolgendes Versenden der Aufrufe, die separat für die stereoskopischen Bilder durchzuführen sind. Dieses Verfahren kann optimiert werden, indem die Zwischenstufe den Treiberaufruf derart umwandelt, dass mittels eines einmaligen Versendens eines Aufrufes ebenfalls ein stereoskopischer Effekt hervorgerufen wird. Dies kann mittels der Erweiterung der Parameterliste eines Aufrufes, der von der Zwischenstufe an den Treiber versendet wird, realisiert werden. Beispielsweise wird der Treiberaufruf ALLOC(F,B) in den Aufruf ALLOC (FR,BR,FL,BL) umgewandelt. Der auf diese Weise modifizierte Treiberaufruf wird von dem Treiber verstanden, denn ein Treiber interpretiert die empfangenen Parameter eines Treiberaufrufes als eine Liste von Operationen, die dieser durchzuführen hat. Aus diesem Grund kann die Länge der Parameter in einem Aufruf, der von der Zwischenstufe an den Treiber gerichtet ist, modifiziert werden, ohne dass dieser Vorgang von dem Treiber missverstanden wird. Mit der Anzahl der an den Treiber übergebenen Parameter hängt die Anzahl der notwendigen Operationen zusammen. Im Falle des Aufrufes ALLOC (FR,BR,FL,BL) heißt das zum Beispiel eine vierfache Allokierung des Bildspeichers. Auf ähnliche Art und Weise erfolgt die Umwandlung anderer Treiberaufrufe, die separat für stereoskopische Bilder durchzuführen sind. Zum Beispiel wird der Treiberaufruf DRAW(Objekt,B) in einen Aufruf DRAW(ObjektR,BR,ObjektL,BL) umgewandelt. Die Behandlung der Treiberaufrufe, die bei einer einmaligen Durchführung im Treiber eine gleichzeitige Auswirkung auf die stereoskopischen Bilder haben, wird auf die gleiche Weise, wie in dem oben beschriebenen Ausführungsbeispiel, realisiert. Das heißt, derartige Treiberaufrufe werden von der Zwischenstufe an den Treiber weitergeleitet.

Charakteristisch für die Erfindung ist ihre Unabhängigkeit von der zur Verfügung stehenden Hardware. Die Funktionalität ist nämlich für verschiedene zugrundeliegende Hardware gewährleistet. Das gemäß Figur 1 angegebene Ausführungsbeispiel basiert auf der DirectX-Programmierschnittstelle. Die Verwendung einer anderen Programmierschnittstelle, die einen stereoskopischen Modus unterstützt, ändert jedoch nichts an der Ausführbarkeit der Erfindung.

## Patentansprüche

1. Verfahren zu einer hardware-unabhängigen Realisierung einer stereoskopischen Darstellung mittels Erzeugung von stereoskopischen Bildern für eine monokulare Anwendung mit einem Treiber und mit einer weiteren zwischen der Anwendung und dem Treiber bereitgestellten Einheit, indem
- ein Aufruf von der Anwendung an die weitere Einheit übergeben wird,
- der Aufruf in der weiteren Einheit untersucht wird,
- im Falle, dass es sich um einen Aufruf handelt, der separat für die stereoskopischen Bilder durchzuführen ist, wird dieser in einen oder mehrere weitere Aufrufe umgewandelt, die in dem Treiber separat für die stereoskopischen Bilder ausgeführt werden,
- im Falle, dass es sich um einen Aufruf handelt, der bei einmaliger Ausführung in dem Treiber sich auf die stereoskopischen Bilder auswirkt, wird dieser an den Treiber weitergeleitet,
- die mittels der ausgeführten Aufrufe erzeugten stereoskopischen Bilder werden mit einer erweiterten Umschaltfunktion zu einer stereoskopischen Darstellung gebracht.

2. Verfahren nach Anspruch 1, **dadurch gekennzeichnet, dass** die erweiterte Umschaltfunktion ein Umschalten zwischen den dargestellten und den erzeugten stereoskopischen Bildern bewirkt.

3. Verfahren nach Anspruch 1 oder 2, **dadurch gekennzeichnet, dass** bei einem Aufruf, der separat für die stereoskopischen Bilder durchzuführen ist, die Umwandlung in einen weiteren Aufruf mittels einer Erweiterung einer Parameterliste des Aufrufes realisiert wird.

4. Verfahren nach Anspruch 1 oder 2, **dadurch gekennzeichnet, dass** bei der Umwandlung in mehrere weitere Aufrufe eine separate Ausführung der weiteren Aufrufe für die stereoskopischen Bilder im Treiber mittels eines mehrfachen Versendens der weiteren Aufrufe von der weiteren Einheit an den Treiber realisiert wird.

5. Verfahren nach einem der vorherigen Ansprüche, **dadurch gekennzeichnet, dass** die stereoskopischen Bilder mittels eines Verfahrens zur Erzeugung von zwei separaten Bildern jeweils für das rechte und das linke Auge bereitgestellt werden.

6. Verfahren nach Anspruch 5, **dadurch gekennzeichnet, dass** das Verfahren zur Bereitstellung der stereoskopischen Bilder auf einem z-Wert basiert.

7. Verfahren nach Anspruch 5, **dadurch gekennzeichnet, dass** das Verfahren zur Bereitstellung der stereoskopischen Bilder auf einer Transformationsmatrix, die auf ein geometrisches Modell angewendet wird, realisiert wird.

8. Verfahren nach Anspruch 1 oder 7, **dadurch gekennzeichnet, dass** die monokulare Anwendung ein aus einer darzustellenden Szene erzeugtes geometrisches Modell und eine Transformationsmatrix bereitstellt.

9. Verfahren nach Anspruch 1 oder 6, **dadurch gekennzeichnet, dass** die monokulare Anwendung ein aus einer darzustellenden Szene erzeugtes virtuelles Bild bereitstellt.

10. Verfahren nach einem der Ansprüche 1 bis 9, **dadurch gekennzeichnet, dass** der Treiber eine Hardware ansteuert.

11. Verfahren nach Anspruch 10, **dadurch gekennzeichnet, dass** die Erzeugung der stereoskopischen Bilder in der Hardware vorgenommen wird.

12. Verfahren nach einem der Ansprüche 1 bis 11, **dadurch gekennzeichnet, dass** die Erzeugung und Darstellung der stereoskopischen Bilder mit Hilfe von Puffern realisiert wird.

13. Verfahren nach Anspruch 12, **dadurch gekennzeichnet, dass** die Puffer aus mindestens zwei Frontpuffern für die Darstellung und mindestens zwei Hintergrundpuffern für die Erzeugung der stereoskopischen Bilder bestehen.

14. Verfahren nach einem der Ansprüche 1 bis 13, **dadurch gekennzeichnet, dass** die erweiterte Umschaltfunktion als Parameter mindestens zwei Hintergrundpuffer enthält.

15. Verfahren nach einem der Ansprüche 1 bis 14, **dadurch gekennzeichnet, dass** die Anwendung zwecks der Bereitstellung der Aufrufe an den Treiber eine benutzerfreundliche Programmierschnittstelle verwendet.

16. Verfahren nach einem der Ansprüche 1 bis 15, **dadurch. gekennzeichnet, dass** die weitere Einheit zwischen der benutzerfreundlichen Programmierschnittstelle und dem Treiber bereitgestellt wird.

17. Verfahren nach einem der Ansprüche 1 bis 15, **dadurch gekennzeichnet, dass** die weitere Einheit zwischen der Anwendung und der benutzerfreundlichen Programmierschnittstelle bereitgestellt wird.

18. Verfahren nach einem der Ansprüche 15, 16 oder 17, **dadurch gekennzeichnet, dass** die benutzerfreundliche Programmierschnittstelle die DirectX- oder die OpenGL Programmierschnittstelle ist.

19. Vorrichtung zu einer hardware-unabhängigen Realisierung einer stereoskopischen Darstellung mittels Erzeugung von stereoskopischen Bildern für eine monokulare Anwendung mit einem Treiber und mit einer weiteren zwischen der Anwendung und dem Treiber bereitgestellten Einheit mit
- Mitteln zum Empfangen eines Aufrufes,
- Mitteln zur Untersuchung eines Aufrufes,
- Mitteln zur Umwandlung eines Aufrufes in einen oder mehrere weitere Aufrufe,
- Mitteln zur Weiterleitung eines Aufrufes an den Treiber,
- Mitteln zum Versenden eines weiteren Aufrufes an den Treiber,
- Mitteln zur Behandlung eines von dem Treiber erhaltenen Resultates,
- Mitteln zur Realisierung einer Umschaltfunktion für die Darstellung der stereoskopischen Bilder.

20. Vorrichtung nach Anspruch 19, **dadurch gekennzeichnet, dass** der Treiber über eine Unterstützung für eine erweiterte stereoskopische Umschaltfunktion verfügt.

21. Vorrichtung nach Anspruch 19 oder 20, **dadurch gekennzeichnet, dass** die weitere Einheit über Mitteln zur Realisierung eines Verfahrens zur Bereitstellung von stereoskopischen Bildern verfügt.

## Claims

1. Method for performing of a hardware independent stereoscopic representation by generating stereoscopic images for a monocular application with a driver and with a further entity located between the application and the driver in that
- a call is delivered from the application to the further unit,
- the call is examined in the further unit,
- in case the call is to be performed separately for the stereoscopic images, said call is transformed in one or several further calls that are performed separately for the stereoscopic images in the driver,
- in case the call is to be performed once in the driver with an effect on the stereoscopic images, said call is forwarded to the driver,
- the generated stereoscopic images by means of performing the calls are represented to the observer by means of an extended switching function to the observer.

2. Method according to claim 1 **characterised in that** the extended switching function performs a switching between the represented and the generated stereoscopic images.

3. Method according to claim 1 or 2 **characterised in that** for a call that is to be performed separately for the stereoscopic images, the transformation in a further call is realised by means of an extension a parameter list of said call.

4. Method according to claim 1 or 2 **characterised in that** for the transformation of a call in several further calls, a separate performing of the further calls for the stereoscopic images is realised by means of sending the further calls multiple from the further unit to the driver.

5. Method according to one of the preceding claims **characterised in that** the stereoscopic images are provided by means of a method for generation two separate images, for the right and for the left eye.

6. Method according to claim 5 **characterised in that** the method for provisioning of the stereoscopic images is based on a z-value.

7. Method according to claim 5 **characterised in that** the method for provisioning of the stereoscopic images is based on a transformation matrix that is applied to a geometrical model.

8. Method according to claim 1 or 7 **characterised in that** the monocular application provides a geometrical model generated from a scene to be represented and a transformation matrix.

9. Method according to claim 1 or 6 **characterised in that** the monocular application provides a virtual picture generated from a scene to be represented.

10. Method according to one of the claims 1 to 9 **characterised in that** the driver controls hardware.

11. Method according to claim 10 **characterised in that** the generation of the stereoscopic images is carried out in the hardware.

12. Method according to one of the claims 1 to 11 **characterised in that** the generation and the representation of the stereoscopic images is realized by means of buffers.

13. Method according to claim 12 **characterised in that** the buffers comprise at least two front buffers for the representation and at least two background buffers for the generation of the stereoscopic images.

14. Method according to one of the claims 1 to 13 **characterised in that** the extended switching function contains as a parameter at least two background buffers.

15. Method according to one of the claims 1 to 13 **characterised in that** the application for the purpose of the provisioning of the calls to the driver uses a user-friendly programming interface.

16. Method according to one of the claims 1 to 15 **characterised in that** the further unit is provided between the user-friendly programming interface and the driver.

17. Method according to one of the claims 1 to 15 **characterised in that** the further unit is provided between the application and the user-friendly programming interface.

18. Method according to one of the claims 15,16 or 17 **characterised in that** the user-friendly programming interface is the DirectX- or the OpenGL programming interface.

19. Device for performing of a hardware independent stereoscopic representation by generating stereoscopic images for a monocular application with a driver and with a further entity located between the application and the driver with
- means for receiving a call,
- means for examination a call,
- means for transformation of call into one or several further calls,
- means for forwarding a call to the driver,
- means for sending a further call to the driver,
- means for processing a result received from the driver,
- means for realization a switching function for representation of the stereoscopic images.

20. Device according to claim 19 **characterised in that** the driver has a support for an extended stereoscopic switching function.

21. Device according to claim 19 or 20 **characterised in that** the further unit has means for the realisation of a method for provisioning of stereoscopic images.

## Revendications

1. Procédé de réalisation, indépendante de l'équipement informatique, d'une représentation stéréoscopique par création d'images stéréoscopiques pour une application monoculaire, comportant un pilote et une autre unité mise disposition entre l'application et le pilote, en
- transmettant un appel de l'application à l'autre unité,
- étudiant l'appel dans l'autre unité,
- au cas où il s'agit d'un appel qui doit être réalisé séparément pour les images stéréoscopiques, celui-ci est converti en un ou plusieurs autres appels qui sont réalisés dans le pilote séparément pour les images stéréoscopiques,
- au cas où il s'agit d'un appel qui s'exerce sur les images stéréoscopiques lorsqu'il est réalisé une fois dans le pilote, il est communiqué au pilote,
- les images stéréoscopiques créées au moyen des appels réalisés sont transformées en une représentation stéréoscopique grâce à une fonction de commutation étendue.

2. Procédé selon la revendication 1, **caractérisé en ce que** la fonction de commutation étendue provoque une commutation entre les images stéréoscopiques représentées et créées.

3. Procédé selon la revendication 1 ou 2, **caractérisé en ce qu'**en cas d'un appel qui doit être réalisé séparément pour les images stéréoscopiques, la conversion en un autre appel est réalisée au moyen d'une extension d'une liste de paramètres de l'appel.

4. Procédé selon la revendication 1 ou 2, **caractérisé en ce que**, lors de la conversion en plusieurs autres appels, une réalisation séparée des autres appels pour les images stéréoscopiques a lieu dans le pilote au moyen d'un envoi multiple des autres appels de l'autre unité au pilote.

5. Procédé selon l'une quelconque des revendications précédentes, **caractérisé en ce que** les images stéréoscopiques sont mises à disposition au moyen d'un procédé de création de deux images séparées respectivement pour l'oeil droit et l'oeil gauche.

6. Procédé selon la revendication 5, **caractérisé en ce que** le procédé de mise à disposition des images stéréoscopiques est basé sur une valeur z.

7. Procédé selon la revendication 5, **caractérisé en ce que** le procédé de mise à disposition des images stéréoscopiques est réalisé sur une matrice de transformation qui est appliquée à un modèle géométrique.

8. Procédé selon la revendication 1 ou 7, **caractérisé en ce que** l'application monoculaire met à disposition un modèle géométrique créé à partir d'une scène à représenter et une matrice de transformation.

9. Procédé selon la revendication 1 ou 6, **caractérisé en ce que** l'application monoculaire met à disposition une image virtuelle créée à partir d'une scène à représenter.

10. Procédé selon l'une quelconque des revendications 1 à 9, **caractérisé en ce que** le pilote commande un équipement informatique.

11. Procédé selon la revendication 10, **caractérisé en ce que** la création des images stéréoscopiques est effectuée dans l'équipement informatique.

12. Procédé selon l'une quelconque des revendications 1 à 11, **caractérisé en ce que** la création et la représentation des images stéréoscopiques est réalisée à l'aide de tampons.

13. Procédé selon la revendication 12, **caractérisé en ce que** les tampons consistent en au moins deux tampons frontaux pour la représentation et au moins deux tampons d'arrière-plan pour la création des images stéréoscopiques.

14. Procédé selon l'une quelconque des revendications 1 à 13, **caractérisé en ce que** la fonction de commutation étendue contient comme paramètres au moins deux tampons d'arrière-plan.

15. Procédé selon l'une quelconque des revendications 1 à 14, **caractérisé en ce que** l'application utilise, aux fins de la mise à disposition des appels au pilote, une interface de programmation conviviale.

16. Procédé selon l'une quelconque des revendications 1 à 15, **caractérisé en ce que** l'autre unité est mise à disposition entre l'interface de programmation conviviale et le pilote.

17. Procédé selon l'une quelconque des revendications 1 à 15, **caractérisé en ce que** l'autre unité est mise à disposition entre l'application et l'interface de programmation conviviale.

18. Procédé selon l'une quelconque des revendications 15, 16 ou 17, **caractérisé en ce que** l'interface de programmation conviviale est l'interface de programmation DirectX ou OpenGL.

19. Dispositif de réalisation, indépendante du matériel informatique, d'une représentation stéréoscopique par création d'images stéréoscopiques pour une application monoculaire, comportant un pilote et une autre unité mise à disposition entre l'application et le pilote comprenant
- des moyens de réception d'un appel,
- des moyens d'étude d'un appel,
- des moyens de conversion d'un appel en un ou plusieurs autres appels,
- des moyens de communication d'un appel au pilote,
- des moyens d'envoi d'un autre appel au pilote,
- des moyens de traitement d'un résultat reçu par le pilote,
- des moyens de réalisation d'une fonction de commutation pour la représentation des images stéréoscopiques.

20. Dispositif selon la revendication 19, **caractérisé en ce que** le pilote dispose d'une assistance pour une fonction de commutation stéréoscopique étendue.

21. Dispositif selon la revendication 19 ou 20, **caractérisé en ce que** l'autre unité dispose de moyens de réalisation d'un procédé de mise à disposition d'images stéréoscopiques.
